# EUROPEAN PATENT SPECIFICATION

(11) **EP 1 356 730 B1**
(45) Date of publication and mention of the grant of the patent: **20.06.2007**
(21) Application number: 03007733.3
(22) Date of filing: 04.04.2003
(51) Int. Cl.: A01M 21/04, A01M 19/00, A01M 5/00

(54) **A method for thermal pest control**
Verfahren für thermische Schädlingsbekämpfung
Méthode de lutte contre les parasites par action thermique

(30) Priority: 26.04.2002 US 132693
(43) Date of publication of application: 29.10.2003
(73) Proprietor: Lazo Barra, Florencio, Rosario (CL)
(72) Inventor: Lazo Barra, Florencio, Rosario (CL)
(74) Representative: Hoeger, Stellrecht & Partner Patentanwälte

(56) References cited:
- DE-A- 2 828 743
- US-A- 2 114 494
- US-A- 5 974 728

## Description

### FIELD OF THE INVENTION

This invention relates to thermal pest control in fruit production and agriculture. More specifically the method of the present invention is applicable in open spaces dedicated to agriculture and fruit production, as vineyards, fruit orchards, and crops to eliminate preferably undesirable fungus. The method is also suitable for eliminating insects, by dehydrating them and in the case of insects with wings, damaging the wings.

### BACKGROUND OF THE INVENTION

Chemical pest control in agriculture and in fruit culture has been used very successfully, concerning the control of plagues, during the past seventy years. Every year more chemicals are developed, apparently with new advantages over its predecessors, related with cost, easiness to apply, and the range of plagues covered. Unfortunately, also for a long time, and up to these days, it has been discovered that many of these chemicals have undesirable secondary effects, polluting the environment, or other plants and animals, including man. Some of these undesirable effects have been seen only after many years of continuous use of the chemical, due to its cumulative effect over the body, or by genetic transmission, affecting the new generations; other undesirable effects are seen very fast. By these reasons, there is a tendency to look for solutions with a very little impact over the environment or no impact at all.

One of the first non-chemical solutions was the Biological pest control, consisting in stimulating the development of natural predators of these plagues. The problem is sometimes the predator eliminates the plague, but also eliminates some of the natural controls, and then we have a serious ecological problem.

Another group of solutions for pest control, alternative to biological and chemical methods, is the modification of some physical variables of the plague habitat, in this way the plague is in an unfriendly environment for its development and reproduction. In these kinds of solutions is, between others, refrigeration, humidity reduction, applying heat, oxygen reduction. The problem with this kind of solutions is to determine the habitat variables to be modified, its magnitude and the time modified, in order to get the desired effects in the pest and not harm the species to be protected.

In these kind of solutions, heat application has shown to be very useful. One of the first solutions for eliminating microorganisms was the well-known method of pasteurization. This method is only applicable to inanimate substances, of animal or vegetal origin, but it cannot be used when these animals or vegetables are alive. Other methods for pest control using heat have been proposed, like the one disclosed by Forbes in the US Patent N° 4,817,329 or the one proposed by Binker et al. US Patent N° 6,279,261.

Forbes teaches a method to kill insects, termites by example, in an urban structure, let us say, an insulated space, in which a heated gas, with no phase changes, is insufflated. The gas being at a temperature between the ambient temperature and a lethal temperature for the insect, maintaining said temperature for a sufficient period of time to kill the insect. Forbes method considers the installation of entrance ducts and exit ducts for the heated gases. Forbes also teaches the space to be treated has to be insulated with mats in windows and doors, in order to facilitate the cumulating of heated gases. According to this, Forbes method cannot be used in open spaces, and therefore, cannot be used in agriculture or fruit production.

Binker also teaches a method to kill plagues in closed spaces, like mills or food processing plants. Binker's procedure does not require insulating spaces, but this is because his space is normally closed and with out windows, like in the urban structures of Forbes. Then Binker cannot apply his method in open fields like in agriculture or fruit production. The most important concern of Binker is not to contaminate or alter the foods in the processing plant, avoiding the introduction of combustion gases and controlling the humidity of the heated air.

Neither Forbes nor Binker teaches a pest control method using heated gases or heated air in an open space and where it is necessary to maintain or preserve with any harm, living vegetable species like vines, fruits trees, or plants.

DE-A-28 28 743 discloses an apparatus and a method for insect control in fruit production and agriculture by means of hot air, wherein a stream of hot air is projected directly at a plant that is infested with insects by manually swaying the hot air stream in a quick fanning movement over said plant without damaging the plant.

US-A-5,974,728 discloses a method for insect control wherein, in one embodiment, insects contained in the air above the plants are pulled into the apparatus and killed by hot air heated by heated grids within the apparatus and heated air is directed towards the surface of the soil in the area between the crops to eliminate insects, larvae, eggs, and weeds therein. In a further embodiment disclosed in US-A-5,974,728, heated air is blown onto the surfaces of the soil prior to cultivation in order to eliminate all insects, larvae, and eggs located on the surface of the soil.

### BRIEF DESCRIPTION OF THE INVENTION

The present invention offers a method according to claim 1 for thermal pest control in fruit production and agriculture, in open spaces, like vineyards, fruit orchards or other. The method of the present invention allows, preferably, eliminating fungus that affects the plants, and also eliminate harmful insects, by dehydrating them and in the case of winged insect, damaging the wings. In the case of insects, the method is especially effective to eliminate harmful insects when they are in a vulnerable stage, like larvae in *Drosophila melanogaster*. Also it has been observed the clear difference between the rows treated with the thermal method of the present invention in a vineyard and the rows treated with chemicals to protect the vines against the fungus *Botritis cirenea*. In the last mentioned rows it can be observed sporadic attacks of a mite called *Brevipalpus chilensis,* while the rows treated according to the present method are completely free of this plague.

The method of the invention is very simple; the economical and environmental advantages are higher than the advantages of the previous art. The concept in which is based the invention breaks a paradigm, applying for the first time heated air directly to the plants, to eliminate the plague. Basically the procedure consists in projecting, from a moving vehicle, one or more streams of heated air, at temperatures between 65°C to 250°C, and at a speed between 80 and 250 km per hour, these streams of heated air over the plants at a minimum distance of about 0.20 m from the exits of hot air.

The present invention has been successfully used, controlling the fungus Oidium (*Uncinula necator*) and Botritis (*Botritis cinerea*) in table grape vineyards.

Up to this time, these two-fungus diseases have been controlled only with the use of chemical fungicides, with the consequent harm to the environment and to the consumers.

Secondary, the present invention allows to eliminate condensation over the fruits or plants, preventing the development of undesirable fungus, and allowing the producers to pack their fruits without the problems related with condensation.

Therefore, a primary objective of the invention is to offer a method for pest control in fruit production and agriculture, by projecting streams of hot air to the plants, from a movable vehicle.

Other objective of the present invention is to offer a method for fungus control in fruit production and in agriculture, especially in vineyards and fruit orchards, the method not being limited to it, by the application of streams of hot air to the plants from a movable vehicle.

A third objective of the present invention consists in offering a method, which beyond plague control in agriculture and fruit production, can reduce or eliminate condensation over the fruits or plants.

### DETAILED DESCRIPTION OF THE INVENTION

The present invention consists in a method according to claim 1 for thermal control of plagues in fruit production and agriculture, in open spaces. The method of the invention is applied preferably in vineyards in order to control fungus diseases like Oidio (*Uncinula necator*) and Botritis (*Botritis cinerea*) which attacks grape bunches or, in the cases of apple orchards, to control Venturia (*Venturia inaequalis*). These fungus dies at temperatures between 40°C to 60°C; the insects are affected at greater temperatures depending on the species and its stage.

The method consists in projecting one or more streams of hot air, at a temperature between approximately 65°C to 250°C, at a minimum distance of about 0.20 m from the plant, from a movable vehicle, moving preferably at a speed between approximately 5 to 15 km per hour and in a direction substantially parallel to the rows. The streams of hot air are thrown at a speed between approximately 80 to 250 km per hour, preferably at a speed approximately of 100 km per hour. Being the stream of hot air at such a high temperature, for example 250°C, and having a speed as the mentioned before, the transference of heat to the treated vegetal is sufficiently high, but sufficiently short, to damage the plague but not damaging the plant. In reality, in the plant, the hot air applied as mentioned before, stays at temperature above 45°C for a period of 16 seconds.

In preliminary trials in vineyards with fungus diseases, applying hot air at 110°C, not only fungus were controlled, but also some insects were eliminated, like the fly *Drosophila melanogaster.* Also were severely damaged the *Micrapate scabrata, Capitarsia turbata* and *Proeulia auraria*.

The appropriate temperature to be used in this method will depend in each case, on the type of crop, the plague and the ambient temperature.

For the application of the streams of hot air over the treated field, from the movable vehicle, it can be considered an orientation of the streams parallel to the rows, perpendicular to them, or oblique to the rows, depending on the heat sensibility of the plant, the row thickness or the tree foliage.

It is necessary to clarify that, in spite of the very high speed and temperature of the stream of hot air, it expands very rapidly at the exit, and as the source of hot air is moving, the time in which the plant is under the effect of the hot air is very short.

## Claims

1. A method for thermal pest control in agriculture and fruit production which comprises projecting at least one stream of hot air directly at a crop from a vehicle which moves in a direction substantially parallel to the rows of the crop without damaging the crop,
wherein said at least one stream of hot air exits at a temperature between approximately 65°C and approximately 250°C,
wherein said at least one stream of hot air is projected at a minimum distance of about 0.20 m from the crop, and
wherein said at least one stream of hot air is projected at a speed between approximately 80 and approximately 250 km per hour.

2. The method for thermal pest control according to claim 1, wherein said at least one stream of hot air is projected in a direction substantially parallel to the rows of the crop.

3. The method for thermal pest control according to claim 1, wherein said at least one stream of hot air is projected in a direction substantially transverse to the rows of the crop.

4. The method for thermal pest control according to claim 1, wherein said at least one stream of hot air is projected in a direction substantially oblique to the rows of the crop.

5. The method for thermal pest control according to any of claims 1 to 4, wherein the pest to be controlled is any of the fungi *Uncinula necator, Botritis cinerea* and *Venturia inaequalis*; or any of the insect varieties like *Drosophila melanogaster, Micrapate scabrata, Capitarsia turbata* and *Proeulia auraria*.

## Patentansprüche

1. Verfahren zur thermischen Schädlingsbekämpfung in Landwirtschaft und Früchteerzeugung, umfassend das Projizieren mindestens eines Stroms heißer Luft direkt auf Nutzpflanzen von einem Fahrzeug aus, welches sich in einer Richtung bewegt, die im Wesentlichen parallel zu den Reihen der Nutzpflanzen ist, ohne die Nutzpflanzen zu schädigen,
wobei der mindestens eine Strom heißer Luft bei einer Temperatur zwischen ca. 65 °C und ca. 250 °C austritt,
wobei der mindestens eine Strom heißer Luft in einem Mindestabstand von ca. 0,20 m von den Nutzpflanzen projiziert wird und
wobei der mindestens eine Strom heißer Luft mit einer Geschwindigkeit zwischen ca. 80 und ca. 250 km pro Stunde projiziert wird.

2. Verfahren zur thermischen Schädlingsbekämpfung nach Anspruch 1, wobei der mindestens eine Strom heißer Luft in einer Richtung projiziert wird, die im Wesentlichen parallel zu den Reihen der Nutzpflanzen ist.

3. Verfahren zur thermischen Schädlingsbekämpfung nach Anspruch 1, wobei der mindestens eine Strom heißer Luft in einer Richtung projiziert wird, die im Wesentlichen quer zu den Reihen der Nutzpflanzen ist.

4. Verfahren zur thermischen Schädlingsbekämpfung nach Anspruch 1, wobei der mindestens eine Strom heißer Luft in einer Richtung projiziert wird, die im Wesentlichen schräg zu den Reihen der Nutzpflanzen ist.

5. Verfahren zur thermischen Schädlingsbekämpfung nach einem der Ansprüche 1 bis 4, wobei der zu bekämpfende Schädling einer der Pilze *Uncinula necator, Botritis cinerea* und *Venturia inaequalis* oder eine der Insektenvarietäten wie *Drosophila melanogaster, Micrapate scabrata, Capitarsia turbata* und *Proeulia auraria* ist.

## Revendications

1. Méthode de lutte contre les parasites par action thermique dans l'agriculture et la production fruitière, comprenant la projection d'au moins un flux d'air chaud, directement sur une culture, depuis un véhicule qui évolue dans une direction sensiblement parallèle aux rangées de la culture, sans endommager la culture,
dans laquelle ledit au moins un flux d'air chaud sort à une température entre environ 65°C et environ 250°C,
dans laquelle ledit au moins un flux d'air chaud est projeté à une distance minimale d'environ 0,20 m de la culture, et
dans laquelle ledit au moins un flux d'air chaud est projeté à une vitesse entre environ 80 et environ 250 km par heure.

2. La méthode de lutte contre les parasites par action thermique selon la revendication 1, dans laquelle ledit au moins un flux d'air chaud est projeté dans une direction sensiblement parallèle aux rangées de la culture.

3. La méthode de lutte contre les parasites par action thermique selon la revendication 1, dans laquelle ledit au moins un flux d'air chaud est projeté dans une direction sensiblement transversale aux rangées de la culture.

4. La méthode de lutte contre les parasites par action thermique selon la revendication 1, dans laquelle ledit au moins un flux d'air chaud est projeté dans une direction sensiblement oblique par rapport aux rangées de la culture.

5. La méthode de lutte contre les parasites par action thermique selon l'une quelconque des revendications 1 à 4, dans laquelle les parasites à maîtriser sont l'un parmi les champignons *Uncinula necator, Botritis cinerea et Venturia inaequalis* ; ou l'un parmi les variétés d'insectes telles que *Drosophila melanogaster, Micrapate scabrata, Capitarsia turbata et Proeulia auraria.*
